Europäisches Patentamt

European Patent Office

Office européen des brevets

(11) Publication number: **0 134 503 B1**

# EUROPEAN PATENT SPECIFICATION

(45) Date of publication of patent specification: **15.05.91**  (51) Int. Cl.⁵: **F16K 1/226, F16K 5/06**

(21) Application number: **84108237.3**

(22) Date of filing: **12.07.84**

(54) A valve sealing mechanism.

(30) Priority: **13.07.83 US 513353**
**18.05.84 US 611741**

(43) Date of publication of application:
**20.03.85 Bulletin 85/12**

(45) Publication of the grant of the patent:
**15.05.91 Bulletin 91/20**

(84) Designated Contracting States:
**AT BE CH DE FR GB IT LI LU NL SE**

(56) References cited:
DE-A- 2 038 905        DE-A- 2 916 984
FR-A- 2 015 867        US-A- 1 043 065
US-A- 3 642 248        US-A- 4 113 268
US-A- 4 277 047

(73) Proprietor: **POSI-SEAL INTERNATIONAL, INC.**
**Routes 49 and US 95**
**North Stonington Connecticut 06359(US)**

(72) Inventor: **Sahba, Bahman**
**513 Roundhill Court**
**Warwick Rhode Island 02886(US)**
Inventor: **Champlin, Harry C., Jr.**
**75 Main Street**
**Hopkinton Rhode Island 02833(US)**
Inventor: **Cory, John M.**
**25 Chadwick Drive**
**Old Lyme Connecticut 06371(US)**

(74) Representative: **Lorenz, Eduard et al**
**Rechtsanwälte Eduard Lorenz - Bernhard**
**Seidler Margrit Seidler - Dipl.-Ing. Hans-K.**
**Gossel Dr. Ina Philipps - Dr. Paul B. Schäu-**
**ble Dr. Siegfried Jackermeier**
**Widenmayerstrasse 23 D-8000 München**
**22(DE)**

## Description

Background of the invention

The present invention relates generally to sealing mechanisms, and more particularly to seal rings having application to valves.

The present invention is an improvement over prior art high-performance sealing mechanisms which have attempted to provide leak proof sealing and which continue to function even in the event of and following high temperature situations or fire. The need for such sealing mechanisms is particularly acute in the petroleum industry, where petroleum drilling and processing are subject, on occasion, to very high temperatures or even combustion of the material handled.

A prior art invention (US-Patent No. 4,113,268) provides a fire proof, bubble-tight sealing mechanism which utilizes a two stage arrangement. A soft primary seal, for example of teflon, is inserted in the rib of a metal seal ring for contact with the complementary surface of a closure member. The teflon material, extending radially inward beyond the metal rib, provides a bubble-tight seal under normal conditions. In the event of fire, the teflon is destroyed. Subsequently, the metal rib of the seal ring dynamically moves into position to form a secondary or metal to metal seal.

While this invention was a major advance in the art, which provided an unprecedented quality of sealing and fire safety in a butterfly valve, certain drawbacks nevertheless exist. The primary seal necessitates the machining of the metal and the insertion of a soft material into the metal rib of the seal ring, the insertion thereof which is a relatively difficult and expensive manufacturing procedure.

US-Patent No. 3,642,248 discloses a valve sealing mechanism which discloses the type of dynamic sealing utilized in a preferred embodiment of the present invention. The seal ring is fitted within a circumferential groove of a body member. A portion of the seal ring extends out of the groove, radially inward, for mating engagement with a closure member or disk. The seal ring is arranged within the groove for movable adjustment in response to the pressure of the system.

The seal ring of US-Patent 3,642,248, in a preferred embodiment, has a backing ring which is held within the groove, beneath the seal ring. This backing ring provides a preloaded sealing force for the side-sealing of the seal ring with the walls of the groove.

The seal ring known from US-Patent 3,642,248 is preferably constructed of a soft material such as teflon. However, a second embodiment discloses a metal seal ring. In the latter, a pair of inclined surfaces at the sides of the seal ring about the lateral sides of the groove and are preloaded by being of a slightly greater dimension than the width of the groove. The front of the seal ring is curved slightly and concavely in relation to the disk surface. This causes the upstream and downstream edges of the seating surface of the seal ring to bite against the disk surface when the seal ring is pushed against the disk.

This metal seal ring has proved unsatisfactory. Although the seal ring is constructed of metal for fire safe performance, the metal to metal contact does not provide the desired quality and reliability of sealing for the desired use of such valves.

A sealing mechanism according to the preamble part of claim 1 is known from US-A-4 277 047. This sealing mechanism is formed of flat sheet metal and bent into shape. The metal seal ring of the device known from US-A-4 277 047 has proved unsatisfactory. Although the seal ring is constructed of metal for fire safe performance, the metal to metal contact does not provide the desired quality and reliability of sealing for the desired use of such valves.

The present invention defined by the claims has important advantages over the prior art. It provides essentially leak proof sealing in a fire proof metal to metal seal. The seal ring may be manufactured conveniently and inexpensively. Due to its metal construction, it may be formed rather than machined and does not require the insertion of a soft plastic part. The metal seal ring design results in high-strength, resilient characteristics which provide for superior sealing and durability.

It is an object of the present invention to provide an improved seal ring which has a high quality of sealing in an extended temperature range.

It is a further object of the invention to provide a seal for use in butterfly valves that are cpable of meeting the requirements of the petroleum industry and withstanding the rigorous conditions which are experienced in such an area of use.

It is a still further object of the invention to provide a sealing mechanism which is operative, and effective throughout an extended range of pressure and temperature.

It is a still further object of the invention to provide a sealing mechanism which may be easily and economically manufactured through forming techniques not requiring expensive machining or fine interference fitting.

It is still a further object of the invention to provide a metal to metal sealing means which achieves a quality of sealing comparable to that of the most stringent metal seal standards.

It is still a further object to provide a metal seal ring which cooperates within a sealing mechanism to provide movable engagment which dynamically responds to the pressure of the system to impart greater sealing force to the metal to metal contact.

It is still a further object of the invention to provide a seal ring which is compressed within a groove, so that a high-strength, resilient side-sealing force is imparted to the engagement of the seal ring with the sides of the groove.

It is a further object of the invention to provide an embodiment in which the seal ring achieves sealing engagement based on a strong spring-like action resulting from compression of the seal ring in both the radial and axial dimensions.

The above and other objects of the present invention will become apparent from a reading of the following description taken in conjunction with the accompanying drawings, which illustrate preferred embodiments thereof.

Brief description of the drawings

Fig. 1 is an exploded perspective view of a conventional trunion or butterfly valve in which the improved seal mechanism of the present invention may be incorporated.

Fig. 2 is a partial cross-sectional view of another preferred embodiment of the present invention which comprises an O-ring formed seal.

Fig. 3 is a partial cross-sectional view of a modified form of the embodiment of fig. 5 wherein the back portion of the seal ring has dual contact with the base of the groove.

Fig. 4A-4D are partial cross-sectional views of another preferred embodiment of the invention wherein gaskets are provided between the seal and the groove.

Fig. 5 is a partial cross-sectional view of a further embodiment of the invention wherein the seal is located on the closure member of a valve.

Description of the preferred embodiments

The present invention can be employed in many kinds of systems which contain fluids at differing pressures, such as hydraulic or pneumatic systems where it is desirable to provide a seal in one or more portions thereof. In such a system, it may be desirable to provide components which can be opened or closed, i.e., positioned so that fluid flow is permitted or obstructed.

The present invention is intended to prevent leakage of fluid when such components are in a closed position, while, without diminishing the efficiency of the seal thus created, permitting such components to be opened with a minimum of force.

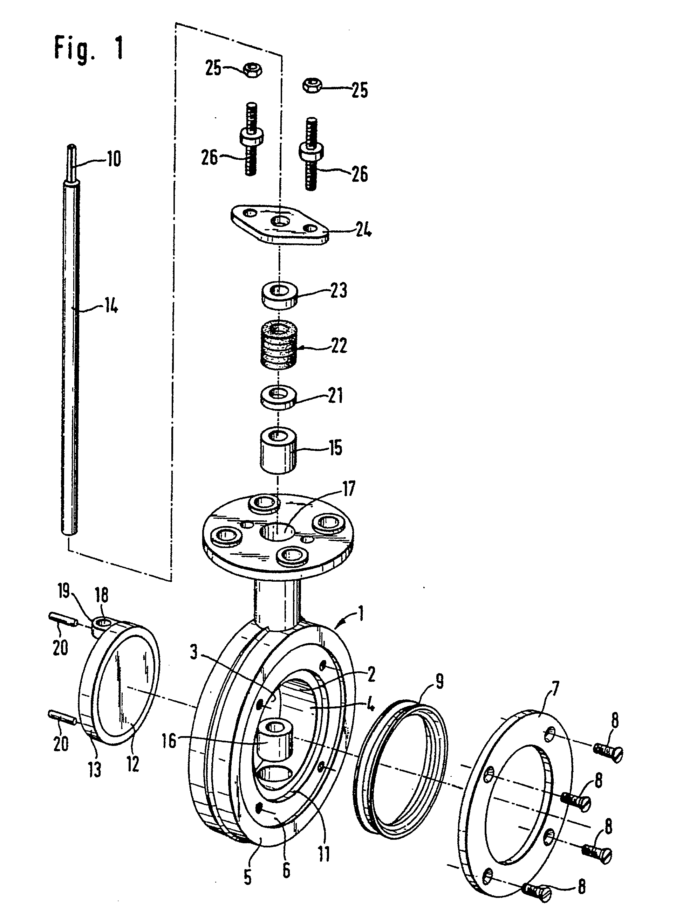

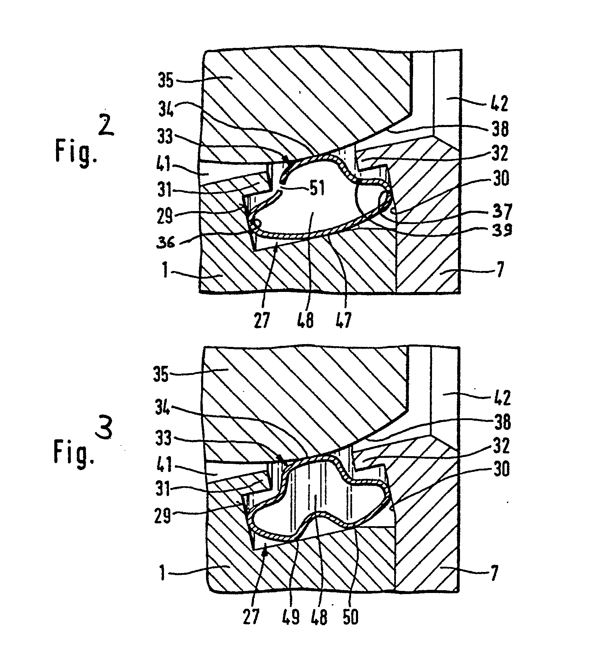

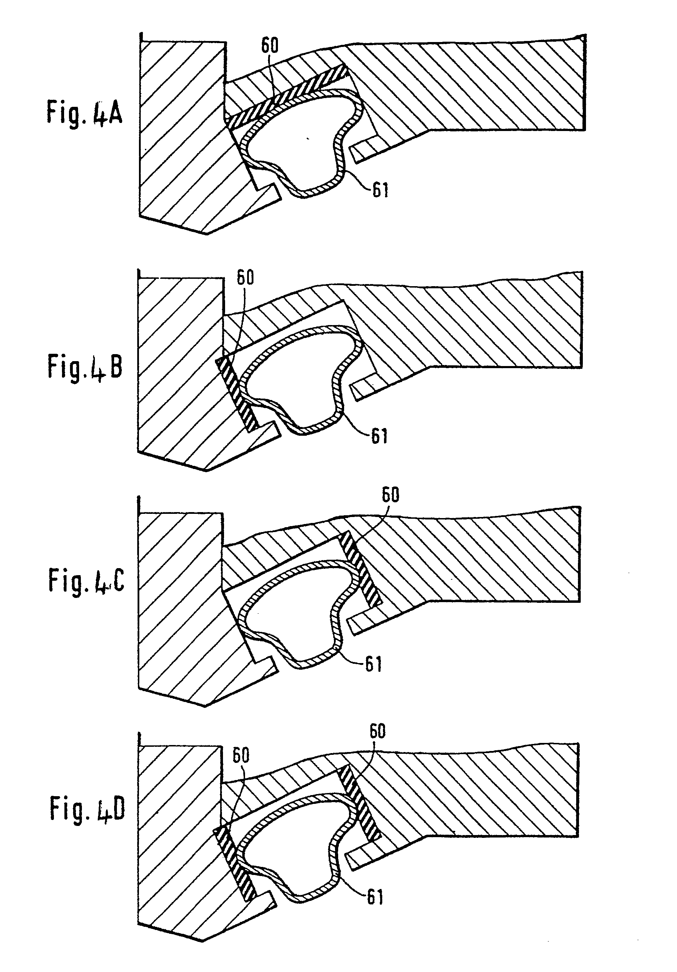

To aid in understanding the arrangement and operating principle of the improved positive shut-off seal of the present invention, it will be described in an embodiment as incorporated in an otherwise conventional high performance butterfly valve or trunnion valve. Fig. 1 shows such a valve in exploded perspective.

The trunnion valve in fig. 1 includes a valve body 1 in the form of a flat annular wafer having an internal passageway 2 with an inlet 3 and an outlet 4. The downstream or outlet face 5 of the valve body is counterbored with an annular recess 6 for flush mounting a retainer ring 7 by means of flat head machine screws 8. Retainer ring 7 serves to hold a sealing ring 9 within a circumferential groove 11 machined in the downstream edge of passageway 2.

A valve disk 12 having a circumferential sealing surface 13 is adapted to be mounted within passageway 2 for rotation about a diametrical axis between an open position in which the valve disk is substantially parallel to the axis of passageway 2 and a shut position in which the valve disk is substantially perpendicular to the passageway axis and sealing surface 13 makes mating contact with the seal ring 9.

Means for pivotally mounting the valve disk in the passageway for rotation between the open and shut positions includes a valve stem 14 mounted in upper and lower bushings 15 and 16 for rotation within a blind hole 17 bored diametrically through the valve body. Valve stem 14 passes through a hole 18 drilled through a diametrical boss 19 on the upstream face of the valve disk, which is locked to the stem by pins 20.

Leakage past the upper end of valve stem 14 is prevented by conventional stem packing means including spacer 21 and resilient packing rings 22, which are compressed in hole 17 against the top of bushing 15 by forcing gland 23 and follower 24 downward by means of nuts 25 screwed down on studs 26. Valve stem 14 is rotated in its bushings by a handle or motor drive (not shown) attached to the squared upper end 27 of the valve stem.

Figure 2 shows a section of the assembled seating arrangement of the valve of figure 1, but showing in detail a preferred embodiment of the seal ring of the present invention. The seal ring is confined in the circumferential groove 27 disposed in the body of the valve. In this particular embodiment, the seal ring is a hollow toroid constructed of metal and having the cross-sectional shape shown in figure 2. The seal ring is comprised of a front seating portion 34, shoulder portions 36, 37 and a back portion 47. The front seating prortion abuts the sealing surface 38 of the disk 35 when the latter is in the closed position. The seating portion is integrally joined to the shoulder portions which are held within the circumferendial groove by flange lips 31 and 32. The shoulder portions are integrally joined at each of the ends opposite the seating portion by the back portion, the seal ring thereby forming one continuous surface enclosing a toroidal cavity 48. The back portion 47 forms a convex surface with respect to the base of the circumferential groove and abuts the base of the circumferential groove when the seal ring is in sealing engagement with the disk. The summit of said convex surface contacts the base of the groove as is evident from figure 2.

Referring to figure 3, the seal ring is modified from the embodiment shown in figure 2 by having dual protuberances 49 and 50, convex with respect to the base of the groove. These protuberances contact said base at two isolated circumferential locations when the seal ring is in mating engagement with the disk. The seal ring of figure 3 is otherwise identical to the seal ring of figure 2.

The seal rings shown in figures 2 and 3 may be obtained by reforming a hollow metal O-ring. Hence, the seal ring may be conveniently and inexpensively manufactured.

The hollow reformed O-rings are relatively thin walled for high resilience. The degree of stiffness or resiliency may be controlled by verying the thickness of the seal ring wall. Consequently, spring-like forces may be achieved when the seal ring of the present invention is compressed.

The strength and resilience of the seal rings shown in figures 2 and 3 may be enhanced by pressurization of the interior or toroidal cavity of the seal ring. The seal ring may be pressurized by injecting a gas into the cavity of the O-ring during fabrication. Alternatively, the interior of the seal ring may be pressurized by providing optional apertures 51 (figure 2) in the upstream wall of the seal ring. System fluid pressure is thereby permitted to enter the interior of the seal ring. Likewise, purge holes may be placed in various other locations along the seal, e.g. in the back of the seal or in either side of the seal, in any of the embodiments of figures 2 and 3, so that the same would result in improved performance of the seal.

The continuous cross-section of the seal ring has the advantage of providing stability to the sealing mechanism, particularly at elevated temperatures. Due to the continuous configuration of the seal ring, the bearing force remains unaffected by high temperatures, whereas other seal rings may tend to loose their sealing force on account of thermal expansion.

All of the seal ring embodiments of the present invention are preferably composed of a high temperature resistant, high corrosion resistant metal alloy exhibiting high yield strength and a satisfactory modulus of elasticity. High alloy materials such as Inconels or Hastalloys may be used. Stainless steel or bronze may also be employed.

The seal rings of the various embodiments of the present invention are formed with a seating portion which is convex with respect to the sealing surface of the closure member. Viewed in cross-section in figures 2-4, the convex seating portion is integrally joined on both sides through an inflection point to a pair of lateral shoulder portions which are convex with respect to the sidewalls of the groove. By the term inflection is meant a change of curvature, with respect to a fixed line intersecting the juncture of the seating portion and shoulder portion, said curvature serving to continuously join the convex surfaces of said seating portion and said shoulder portion.

As an optional modification, bubble-tight sealing may be obtained by applying a suitable coating to the seating portion of the metal seal ring or to the complementary sealing surface of the closure member. For example, a thin layer of teflon may be adhesively coated on the seating portion of the seal ring. Alternatively the seating surface may be coated or plated with such materials as gold, silver, copper, nickel, graphite, or other coatings that would enhance performance.

As as further optional modification, a gasket or gaskets may be inserted into the seal groove, between the seal ring and surface of the groove, to improve the performance of the seal by insuring more consistent leakage results. The use of such seals is illustrated in the drawings of figures 4A throug 4D, which, respectively, show gaskets 60 between the back portion of the seal and the base of the groove (figure 4A); between alternate shoulder portions of the seal and their respective sides of the groove (figures 4B and 4C); and simultaneously between both shoulder portions and their respective sides of the groove (figure 4). Such a gasket may comprise materials such a graphite, asbestos, rubber or other materials. Non-asbestos gasket materials are particularly comprehended for future use.

Although the cross-sectional shapes of the seal rings 61 illustrated in figures 4A through 4D are similar to the shape of the seal disclosed in figure 2, a gasket or gaskets may be similarly utilized with the seals of the embodiment disclosed in figure 3 and with other seals according to the invention. Gaskets used with these embodiments are intended to insure more consistent leakage results. Note that when a gasket is used with seal having the cross-sectional shape of the seal disclosed in figure 2, e.g. figures 4A-4D, the back of the seal need not necessarily abut the base of the groove.

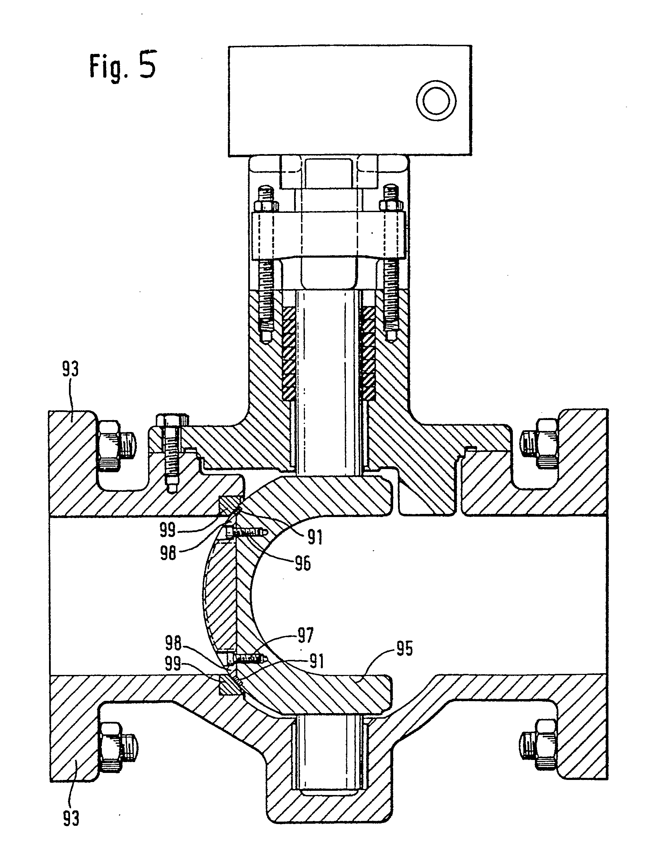

Alternate embodiments of the invention further include those embodiments where the seal is placed on the valve closure memberr as opposed to its being placed in the valve body. Such an embodiment is disclosed in figure 5 which illustrates a ball valve, with a sealing mechanism according to the instant invention, wherein the seal 91 is placed in the ball segment 95. To effect closure, the ball segment 95 is rotated until the seal 91 mounted thereon is compressed against the ball valve body 93. The ball valve utilized may be a six inch 600 ANSI segmented ball valve. In the embodiment of figure 5, the seal may be secured within the groove by a ring 98 and fastening means 96, 97 such as metal screws, The chamfer around the periphery of the ring may be machined smooth. Further the valve body may be modified at the sealing surface to contain a removable metal ring 99 with an erosion, corrosion and wear resistant surface coating. Such a ring may be held in place by an interference fit, wherein the diameter of the outer retaining body is greater than the diameter of the ring 99.

Operation of the preferred embodiment

In the emobidments of figures 2 and 3, seal ring 33, in cooperation with the groove 27, is adapted to communicate high fluid pressure from the region upstream of disk 35 to the interior of the groove 48. This fluid pressure is employed to aid in urging the seal ring 33 and hence seating surface 34 against disk 35 to maintain seal efficiency and avoid leakage therebetween.

The disk when closed exerts a generally radial force against the seating portion of the seal ring. This radial force is resisted by the bearing pressure transmitted through the seal ring. The disk in the closed position, pushing against the seating portion of the seal ring, would expand the distance between the shoulder portions were the latter not contrained by the sidewalls of the groove. This counteraction between the lateral and radial forces serves to increase the side preload of the seal ring against the sidewalls of the groove.

Although the seal ring is partially confined within the circumferential groove in the valve body, there is comparatively little space for radial adjustment of the seal ring within the groove. Thus, the back portion of the seal ring must abut the base of the circumferential groove when the disk is moved to the closed position. The closure of the disk causes a radial force to bear against the seating portion of the seal ring. This force would tend to expand the axial diameter of the seal ring if it were not limited by the side wlals of the circumferential groove. In counteraction to the force exerted by the disk, the back portion of the seal ring presses against the base and the shoulder portions press against the side walls of the circumferential groove so that the seal ring is radially compressed or flattened to some extent within the groove. Consequently, tight sealing contact is achieved between the mating surfaces of the sealing mechanism.

This sealing contact is capable of withstanding and responding to system pressures which would otherwise separate the mating surfaces and break the seal. The sealing mechanism responds to the pressure within the system to strengthen the sealing forces in direct proportion to said pressure so that said sealing forces are at all times greater or equal to the resultant forces which urge the mating surfaces apart.

The use of a gasket in embodiments of the instant invention, as disclosed in figures 4A through 4D, may in operation serve to improve (or insure more consistent) leakage results. The presence of the gasket serves not only to lessen leakage at the point of contact where the seal meets the gasket and where the gasket meets the groove, there providing a typical gasket function, but it also results in a tighter seal at the remaining contact points of the sealing mechanism. For example, as in figure 4A, where the gasket 60 is placed between the back of the seal and the base of the groove, the consequent lessening of area available for expansion of the seal when pressure is applied thereto will result in increased contact pressure at the points where the seal shoulders contact the sides of the groove. Likewise, in figures 4B and 4C, the lateral force applied through the seal shoulders will be increased when closure force is applied to the seal, because the presence of the gasket results in a lessening in the available area for expansion of the seal. Note that when a gasket is utilized with a seal similar in cross-sectional configuration to the seal disclosed in figure 2, the back of the seal need not abut the base of the groove as it does with the embodiment of figure 2.

Although the operation of the valve was described for illustrative purposes in a system having a greater pressure in the upstream passageway, it will be readily understood that the sealing mechanism of the present invention will accomplish sealing action, in an analogous manner, if the higher pressure originates from the other direction.

The embodiment of figure 5, in which the seal is placed on the ball segment of a segmented ball valve, operates in a manner which is slightly different from the previously described embodiments. In the operation of this embodiment, when the ball segment, with the seal mounted thereon, is rotated such that the seal comes in contact with the sealing surface of the valve body, the seal will be compression between the seal groove and the sealing surface whereby substantially leakproof closure will be achieved. The fluid pressure against the seal further increases the pressure at the contact points as described above.

## Claims

1. A sealing mechanism capable of use in a valve subject to extended temperatures and pressures, comprising a metal seal ring (9) adapted to fit within an undercut groove (27), circumferential to the passageway (2) of said valve, said groove (27) having means defining an opening between opposed sides (29, 30), said sides spaced apart by a distance greater than the width of said opening;

said metal seal ring (9) comprising a convex seating portion (34) adapted to extend through said opening for engagement with a complementary sealing surface (38) of a closure member (35) or of a valve body (1), said convex seating portion (34) integrally joined at the sides thereof to one end of each of a pair of lateral shoulder portions (36, 37), one of said shoulder portions being in contact with the sides (29, 30) of said groove (27), and wherein a bearing force is exerted between said seating portion (34) of said seal ring (9) and said sealing surface (38) of said closure member (35) or said valve body (1) when the closure member (35) is in the closed position so that essentially no leakage occurs,

**characterized in**

that also the other of said shoulder portions (36, 37) is in contact with the sides (29, 30) of said groove (27), that the other end of each of said pair of shoulder portions (36, 37) is integrally joined to a back portion (47), wherein said metal seal ring (9) defines a toroidal cavity (48), wherein said shoulder portions (36, 37) are resiliently and slidably preloaded against said sides (25, 30) of said groove (27) and/or said back portion (47) is in contact against the base of said circumferential groove (27), and whereby when the closure member (35) is in the closed position, said seal ring (9) is compressed in the radial direction in proportion to said bearing force whereby side-sealing force at the shoulder portions (36, 37) is correspondingly increased, said seal-ring (9) in a spring-like manner exerting a force in counteraction to the radial force exerted by said closure member (35) against said seating portion (34) of said seal ring (9).

2. A sealing mechanism according to claim 1, wherein when said closure member (35) is in the closed position, a sufficiently high system pressure differential will permit higher pressure gas to enter the interior region of said groove (27) and will effectively be prevented from exiting, said higher pressure gas imparting a bearing force to provide sealing engagement of said seating portion (34) of said seal ring (9) with said sealing surface of said closure member (35).

3. A sealing mechanism according to claim 1 or 2, wherein the seal ring (9) is energized.

4. A sealing mechanism according to one of claims 1 - 3, wherein said shoulder portions are convex with respect to said sides of said groove (27).

5. A sealing mechanism according to one of claims 1 - 4, wherein said shoulder portions are joined in a continuous curve to said seating portion (34) of said seal ring (9) through a circumferential inflection.

6. A sealing mechanism according to claim 1, wherein said seal ring (9) is comprised of a metal alloy.

7. A sealing mechanism according to claim 6, wherein said metal alloy is corrosion resistant.

8. A sealing mechanism according to one of claims 1 - 7, wherein said seal ring (9) comprises stainless steel, Inconel, Hastelloy, titanium or bronze.

9. A sealing mechanism according to one of claims 1 - 8, wherein the sealing contact between said seating portion (34) of said seal ring (9) and said sealing surface of said closure member (35) is concentrated along a single circumferential narrow surface of contact, located at the summit of said convex seating portion.

10. The sealing mechanism of claim 9, wherein said circumferential narrow surface is annular and convex with respect to said closure member (35).

11. The sealing mechanism of one of claims 1 - 10, wherein the sealing surface of said closure member (35) is convex with respect to said seating portion (34) of said seal ring (9).

12. A sealing mechanism according to one of claims 1 - 11, wherein the seating portion of said metal seal ring (9) has a coating of a material softer than that of the seal ring (9) in order to provide enhanced sealing.

13. A sealing mechanism according to claim 12, wherein said softer material comprises gold, silver, copper, nickel, graphite or teflon.

14. A sealing mechanism according to one of claims 1 - 13, wherein said seal ring (9) is internally pressurized.

15. A sealing mechanism according to claim 14, wherein said seal ring (9) contains fluid.

16. A sealing mechanism according to claim 14, wherein said seal ring (9) contains above ambient gas pressure permanently sealed therein, said gas pressure having been injected into the cavity of said seal ring during fabrication thereof.

17. A sealing mechanism according to one of claims 1 - 15, wherein the wall of said seal ring (9) exposed to the upstream fluid pressure defines a plurality of apertures (51) which permit upstream fluid pressure to enter said seal ring.

18. A sealing mechanism according to one of claims 1 - 17, wherein that closure member (35) is a disk.

19. A sealing mechanism according to one of claims 1 - 18 except 9, 10, wherein said convex seating portion comprises a plurality of protuberances (49, 50) convex with respect to the base of said groove (27).

20. A sealing mechanism according to one of claims 1 - 19, wherein said back portion is pressed against the base of said circumferential groove (27) when the closure member (34) is in the closed position.

21. A sealing mechanism according to claim 19, wherein said convex seating portion of said seal ring (9) comprises two circumferential protuberances (49, 50) which traverse the inner length of said seal ring such that a groove is provided between said protuberances.

22. A sealing mechanism according to claim 21, wherein a filler material is secured within said groove between said protuberances (49, 50).

23. A sealing mechanism according to claim 22, wherein said filler material is rigidly secured within said groove between said protuberances (49, 50).

24. A sealing mechanism according to claim 22 or 23, wherein said filler material comprises silver, copper, asbestos, graphite, plastics or elastomers.

25. A sealing mechanism according to one of claims 1 - 24 exept 16, wherein a purge hole is placed through said seal.

26. A sealing mechanism according to one of claims 1 - 25, wherein a gasket (60) is placed between said seal (9) and said circumferential groove (27).

27. A sealing mechanism according to one of claims 1 - 26 except 18, wherein said valve (1) is a ball valve and wherein said closure member is the ball segment (95) of said ball valve.

**Revendications**

1. Mécanisme d'étanchéité pouvant être utilisé dans un organe d'arrêt soumis à un régime de températures et pressions étendu, comprenant un joint annulaire métallique (9) adapté à s'ajuster dans une gorge creusée (27), circonférentielle au passage (2) dudit organe d'arrêt, ladite gorge (27) comportant un moyen définissant une ouverture entre des faces opposées (29, 30), lesdites faces espacées d'une distance supérieure à la largeur de ladite ouverture;

ledit joint annulaire métallique (9) comprenant une portion d'appui convexe (34) adaptée à s'étendre en travers de ladite ouverture pour engagement avec une surface d'étanchéité complémentaire (38) d'un organe de fermeture (35) ou d'un corps d'organe d'arrêt (1), ladite portion d'appui convexe (34) raccordée en partie intégrante sur ses faces à une extrémité de chacun de deux épaulements latéraux (36, 37), un desdits épaulements latéraux étant en contact avec les faces (29, 30) de ladite gorge (27), et dans lequel une force d'appui est exercée entre ladite portion d'appui (34) dudit joint annulaire (9) et ladite surface d'étanchéité (38) dudit organe de fermeture (35) ou dudit corps d'organe d'arrêt (1) lorsque l'organe de fermeture (35) est dans la position fermée de sorte que substantiellement aucune fuite ne se produise,

caractérisé

en ce qu'également l'autre desdits épaulements (36, 37) est en contact avec les faces (29, 30) de ladite gorge (27), en ce que l'autre extrémité de chacun des deux épaulements latéraux (36, 37) est raccordée en partie intégrante à une portion arrière (47), dans lequel ledit joint annulaire métallique (9) définit une cavité toroïdale (48), dans lequel lesdits épaulements latéraux (36, 37) sont préchargés de manière élastique et coulissante contre lesdites faces (29, 30) de ladite gorge (27) et/ou ladite portion arrière (47) est en contact contre la base de ladite gorge circonférentielle (27), et de sorte que lorsque l'organe de fermeture (35) est dans la position fermée, ledit joint annulaire (9) soit comprimé dans le sens radial en proportion de la force d'appui si bien que la force d'étanchéité latérale aux épaulements (36, 37) est accrue en correspondance, ledit joint annulaire (9) d'une manière élastique exerçant une force à l'encontre de la force radiale exercée par ledit organe de fermeture (35) contre ladite portion d'appui (34) dudit joint annulaire (9).

2. Mécanisme d'étanchéité selon la revendication 1, dans lequel lorsque l'organe de fermeture (35) est dans la position fermée, un différentiel de pression suffisamment élevé permet à un gaz de plus haute pression de pénétrer dans la zone interne de ladite gorge (27) et d'être empêché efficacement de sortir, ledit gaz de plus haute pression transmettant une force d'appui pour fournir un engagement d'étanchéité de ladite portion d'appui (34) dudit joint annulaire (9) avec ladite surface d'étanchéité dudit organe de fermeture (35).

3. Mécanisme d'étanchéité selon la revendication 1 ou 2, dans lequel le joint annulaire (9) est parcouru par le courant.

4. Mécanisme d'étanchéité selon l'une des revendications 1 à 3, dans lequel lesdits épaulements sont convexes relativement auxdites faces de ladite gorge (27).

5. Mécanisme d'étanchéité selon l'une des revendications 1 à 4, dans lequel lesdits épaulements sont raccordés en une courbe continue à ladite portion d'appui (34) dudit joint annulaire (9) par une inflexion circonférentielle.

6. Mécanisme d'étanchéité selon la revendication 1, dans lequel ledit joint annulaire (9) est composé d'un alliage métallique.

7. Mécanisme d'étanchéité selon la revendication 6, dans lequel ledit alliage métallique résiste à la corrosion.

8. Mécanisme d'étanchéité selon l'une des revendications 1 à 7, dans lequel ledit joint annulaire (9) comprend de l'acier inoxydable, de l'Inconel, de l'Hastelloy, du titane ou du bronze.

9. Mécanisme d'étanchéité selon l'une des revendications 1 à 8, dans lequel le contact d'étanchéité entre ladite portion d'appui (34) dudit joint annulaire (9) et ladite surface d'étanchéité dudit organe de fermeture (35) est concentré le long d'une seule surface de contact étroite circonférentielle, située au sommet de ladite portion d'appui convexe.

10. Mécanisme d'étanchéité selon la revendication 9, dans lequel ladite surface étroite circonférentielle est annulaire et convexe relativement audit organe de fermeture (35).

11. Mécanisme d'étanchéité selon l'une des revendications 1 à 10, dans lequel la surface d'étanchéité dudit organe de fermeture (35) est convexe relativement à ladite portion d'appui (34) dudit joint annulaire (9).

12. Mécanisme d'étanchéité selon l'une des revendications 1 à 11, dans lequel la portion d'appui dudit joint annulaire (9) comporte un revêtement d'un matériau plus tendre que celui du joint annulaire (9) afin de fournir une étanchéité renforcée.

13. Mécanisme d'étanchéité selon la revendication 12, dans lequel ledit matériau plus tendre comprend de l'or, de l'argent, du cuivre, du nickel, du graphite ou du Téflon.

14. Mécanisme d'étanchéité selon l'une des revendications 1 à 13, dans lequel ledit joint annulaire (9) est pressurisé intérieurement.

15. Mécanisme d'étanchéité selon la revendication 14, dans lequel ledit joint annulaire (9) contient un fluide.

16. Mécanisme d'étanchéité selon la revendication 14, dans lequel ledit joint annulaire (9) contient une pression gazeuse supérieure à la pression ambiante confinée en permanence à l'intérieur de celui-ci, ladite pression gazeuse ayant été injectée dans la cavité dudit joint annulaire au cours de la fabrication de ce dernier.

17. Mécanisme d'étanchéité selon l'une des revendications 1 à 15, dans lequel la paroi dudit joint annulaire (9) exposée à la pression du fluide en amont définit une pluralité d'ouvertures (51) qui permettent à la pression du fluide en amont de pénétrer dans ledit joint annulaire.

18. Mécanisme d'étanchéité selon l'une des revendications 1 à 17, dans lequel ledit organe de fermeture (35) est un disque.

19. Mécanisme d'étanchéité selon l'une des revendications 1 à 18 à l'exception des revendications 9, 10, dans lequel ladite portion d'appui convexe comprend une pluralité de protubérances (49, 50) convexes relativement à la base de ladite gorge (27).

20. Mécanisme d'étanchéité selon l'une des revendications 1 à 19, dans lequel ladite portion arrière est pressée contre la base de ladite gorge circonférentielle (27) lorsque l'organe de fermeture (35) est dans la position fermée.

21. Mécanisme d'étanchéité selon la revendication 19, dans lequel ladite portion d'appui convexe dudit joint annulaire (9) comprend deux protubérances circonférentielles (49, 50) qui sont transversales à la longueur interne dudit joint annulaire de sorte qu'une gorge soit formée entre lesdites protubérances.

22. Mécanisme d'étanchéité selon la revendication 21, dans lequel un matériau d'apport est fixé au sein de ladite gorge entre lesdites protubérances (49, 50).

23. Mécanisme d'étanchéité selon la revendication 22, dans lequel ledit matériau de remplissage est fixé de manière rigide au sein de ladite gorge entre lesdites protubérances (49, 50).

24. Mécanisme d'étanchéité selon la revendication 22 ou 23 dans lequel ledit matériau de remplissage comprend de l'argent, du cuivre, de l'amiante, du graphite, des plastiques, ou des élastomères.

25. Mécanisme d'étanchéité selon l'une des revendications 1 à 24 à l'exception de la revendication 16, dans lequel un orifice de purge est situé à travers ledit joint.

26. Mécanisme d'étanchéité selon l'une des revendications 1 à 25, dans lequel une garniture d'étanchéité (60) est placée entre ledit joint (9) et ladite gorge circonférentielle (27).

27. Mécanisme d'étanchéité selon l'une des revendications 1 à 26 à l'exception de la revendication 18, dans lequel ledit organe d'arrêt (1) est un organe à boulet et dans lequel ledit organe de fermeture est le segment de boulet (95) dudit organe à boulet.

## Ansprüche

1. Dichtmechanismus, der in einer Absperreinrichtung verwendbar ist, die hohen Temperaturen und Drücken ausgesetzt ist, mit einem aus Metall bestehenden Dichtring (9), der passend in eine hinterschnittene Nut (27) einsetzbar ist, die sich in der Umfangsrichtung eines Durchlasses (2) der Absperreinrichtung erstreckt, wobei die Nut (27) mit Mitteln versehen ist, die zwischen einander entgegengesetzten Flanken (29, 30) eine Öffnung begrenzen, und der Abstand zwischen den Flanken größer ist als die Breite der genannten Öffnung;
wobei der aus Metall bestehende Dichtring (9) einen konvexen Sitzteil (34) besitzt, der geeignet ist, sich zum Angriff an einer komplementären Dichtfläche (38) eines Absperrkörpers (35) oder eines Gehäuses (1) der Absperreinrichtung durch die genannte Öffnung hindurch zu erstrecken, der konvexe Sitzteil (34) an seinen Seiten mit einem Ende je eines von zwei seitlich angeordneten Schulterteilen (36, 37) einstückig verbunden ist, der eine dieser Schulterteile mit den Flanken (29, 30) der Nut (27) in Berührung steht und zwischen dem Sitzteil (34) des Dichtringes (9) und der Dichtfläche (38) des Absperrkörpers (35) oder des Gehäuses (1) der Absperreinrichtung eine Andrückkraft ausgeübt wird, so daß bei in der Schließstellung befindlichem Absperrkörper (35) im wesentlichen kein Lecken stattfindet, dadurch gekennzeichnet, daß auch der andere der Schulterteile (36, 37) mit den Flanken (29, 30) der Nut (27) in Berührung steht, daß das andere Ende jedes der beiden Schulterteile (36, 37) einstückig mit einem hinteren Teil (47) verbunden ist, daß der aus Metall bestehende Dichtring (9) einen toroidförmigen Hohlraum (48) begrenzt, daß die Schulterteile (36, 37) gegen die Flanken (29, 30) der Nut (27) elastisch vorbelastet sind und/oder der hintere Teil (47) an dem Grund der Umfangsnut (27) angreift, daß bei in der Schließstellung befindlichem Absperrkörper (35) der Dichtring (9) in der radialen Richtung proportional der Andrückkraft zusammengedrückt ist, so daß die Seitenabdichtkraft an den Schulterteilen (36, 37) entsprechend verstärkt wird, und daß der Dichtring (9) nach Art einer Feder eine Kraft ausübt, die der von dem Absperrkörper (35) gegen den Sitzteil (34) des Dichtringes (9) ausgeübten radialen Kraft entgegenwirkt.

2. Dichtmechanismus nach Anspruch 1, dadurch gekennzeichnet, daß bei in der Schließstellung befindlichem Absperrkörper (35) eine genügend hohe Systemdruckdifferenz einen Eintritt von unter höherem Druck stehenden Gas in den Innenbereich der Nut (27) gestattet und ein Austritt dieses Gas verhindert wird, wobei das unter höherem Druck stehende Gas eine Andrückkraft ausübt, die eine dichtende Anlage des Sitzteils (34) des Dichtringes (9) an der Dichtfläche des Absperrkörpers bewirkt.

3. Dichtmechanismus nach Anspruch 1 oder 2, dadurch gekennzeichnet, daß der Dichtring (9) energiebeaufschlagt ist.

4. Dichtmechanismus nach einem der Ansprüche 1 bis 3, dadurch gekennzeichnet, daß die Schulterteile in Bezug auf die Flanken der Nut (27) konvex ist.

5. Dichtmechanismus nach einem der Ansprüche 1 bis 4, dadurch gekennzeichnet, daß die Schulterteile mit dem Sitzteil (34) des Dichtringes (9) über eine umlaufende Wende in einer stetigen Kurve mit dem Sitzteil (34) verbunden sind.

6. Dichtmechanismus nach Anspruch 1, dadurch gekennzeichnet, daß der Dichtring (9) aus einer Metallegierung besteht.

7. Dichtring nach Anspruch 6, dadurch gekennzeichnet, daß die Metallegierung korrosionsbeständig ist.

8. Dichtmechanismus nach einem der Ansprüche 1 bis 7, dadurch gekennzeichnet, daß der Dichtring (9) wenigstens teilweise aus nichtrostendem Stahl, Inconel, Hastelloy, Titan oder Bronze besteht.

9. Dichtmechanismus nach einem der Ansprüche 1 bis 8, dadurch gekennzeichnet, daß die dichtende Berührung zwischen dem Sitzteil (34) des Dichtringes (9) und der Dichtfläche des Absperrkörpers (35) auf eine einzige, schmale, sich in der Umfangsrichtung erstreckende Berührungsfläche konzentriert ist, die am Scheitel des konvexen Sitzteils angeordnet ist.

10. Dichtmechanismus nach Anspruch 9, dadurch gekennzeichnet, daß die schmale sich in der Umfangsrichtung erstreckende Fläche ringförmig und in Bezug auf den Absperrkörper (35) konvex ist.

11. Dichtmechanismus nach einem der Ansprüche 1 bis 10, dadurch gekennzeichnet, daß die Dichtfläche des Absperrkörpers (35) in Bezug auf den Sitzteil (34) des Dichtringes (9) konvex ist.

12. Dichtmechanismus nach einem der Ansprüche 1 bis 11, dadurch gekennzeichnet, daß zur besseren Abdichtung der Sitzteil des aus Metall bestehenden Dichtringes (9) einen Überzug aus einem Werkstoff besitzt, der weicher ist als der Werkstoff des Dichtringes (9).

13. Dichtmechanismus nach Anspruch 12, dadurch gekennzeichnet, daß der weichere Werkstoff wenigstens teilweise aus Gold, Silber, Kupfer, Nickel, Graphit oder Teflon besteht.

14. Dichtmechanismus nach einem der Ansprüche 1 bis 13, dadurch gekennzeichnet, daß der Dichtring (9) innen druckbeaufschlagt ist.

15. Dichtmechanismus nach Anspruch 14, dadurch gekennzeichnet, daß der Dichtring (9) Fluid enthält.

16. Dichtmechanismus nach Anspruch 14, dadurch gekennzeichnet, daß der Dichtring (9) einen dauerhaft darin eingeschlossenen Gasdruck enthält, der höher ist als der Umgebungsdruck und der während der Herstellung des Dichtringes in dessen Hohlraum eingeleitet worden ist.

17. Dichtmechanismus nach einem der Ansprüche 1 bis 15, dadurch gekennzeichnet, daß die dem stromaufwärtigen Fluiddruck ausgesetzte Wand des Dichtringes (9) eine Mehrzahl von Ausnehmungen (51) begrenzt, die einen Eintritt des stromaufwärtigen Fluiddruckes in den Dichtring gestatten.

18. Dichtmechanismus nach einem der Ansprüche 1 bis 17, dadurch gekennzeichnet, daß der Absperrkörper (35) eine Scheibe ist.

19. Dichtmechanismus nach einem der Ansprüche 1 bis 18, mit Ausnahme von 9, 10, dadurch gekennzeichnet, daß der konvexe Sitzteil eine Mehrzahl von Erhöhungen (49, 50) besitzt, die in Bezug auf den Grund der Nut (27) konvex sind.

20. Dichtmechanismus nach einem der Ansprüche 1 bis 19, dadurch gekennzeichnet, daß bei in der Schließstellung befindlichem Absperrkörper (34) der hintere Teil gegen den Grund der Umfangsnut (27) gedrückt wird.

21. Dichtmechanismus nach Anspruch 19, dadurch gekennzeichnet, daß der konvexe Sitzteil des Dichtringes (9) zwei sich in der Umfangsrichtung erstreckende Erhöhungen (49, 50) besitzt, die sich derart längs der Innenlänge des Dichtringes erstrecken, daß zwischen diesen Erhöhungen eine Nut vorhanden ist.

22. Dichtmechanismus nach Anspruch 21, dadurch gekennzeichnet, daß in der Nut zwischen den Erhöhungen (49, 50) ein Füllstoff befestigt ist.

23. Dichtmechanismus nach Anspruch 22, dadurch gekennzeichnet, daß der Füllstoff in der Nut zwischen den Erhöhungen (49, 50) starr befestigt ist.

24. Dichtmechanismus nach Anspruch 22 oder 23, dadurch gekennzeichnet, daß der Füllstoff wenigstens teilweise aus Silber, Kupfer, Asbest, Graphit, Kunststoff oder Elastomeren besteht.

25. Dichtmechanismus nach einem der Ansprüche 1 bis 24, mit Ausnahme von 16, dadurch gekennzeichnet, daß die Dichtung von einem Spülloch durchsetzt ist.

26. Dichtmechanismus nach einem der Ansprüche 1 bis 25, dadurch gekennzeichnet, daß zwischen der Dichtung (9) und der Umfangsnut (27) eine Dichtung (60) angeordnet ist.

27. Dichtmechanismus nach einem der Ansprüche 1 bis 26, mit Ausnahme von 18, dadurch gekennzeichnet, daß die Absperreinrichtung (1) ein Kugelventil ist und daß der Absperrkörper der Kugelteil (95) des Kugelventils ist.

Fig. 1

Fig. 2

Fig. 3

Fig. 4A

60

61

Fig. 4B

60

61

Fig. 4C

60

61

Fig. 4D

60

60

61

Fig. 5